# EUROPEAN PATENT APPLICATION

(11) **EP 4 693 149 A1**
(43) Date of publication of application: **11.02.2026**
(21) Application number: 24778281.6
(22) Date of filing: 29.03.2024
(51) Int. Cl.: G06Q 30/0601, G06Q 30/02

(54) **DATA PROCESSING METHOD AND APPARATUS, ELECTRONIC DEVICE, AND STORAGE MEDIUM**

(30) Priority: 31.03.2023 CN 202310345014
(71) Applicant: Beijing Youzhuju Network Technology Co., Ltd., Beijing 101299 (CN)
(72) Inventor: WANG, Di, Beijing 100028 (CN); GUO, Xin, Beijing 100028 (CN); FANG, Ting, Beijing 100028 (CN); LIN, Weifang, Beijing 100028 (CN); SU, Chang, Beijing 100028 (CN)
(74) Representative: Grünecker Patent- und Rechtsanwälte PartG mbB
(86) International application number: PCT/CN2024/085049
(87) International publication number: WO 2024/199496

(57) **Abstract**

Embodiments of the disclosure provide a method, apparatus and electronic device for data processing. The method includes: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting a use state of a second selection factor corresponding to a second adjustment mode in the editing page according to a preset correspondence between the first adjustment mode and the second adjustment mode.

## Description

This application claims priority to Chinese Patent Application No. 202310345014.6, filed on March 31, 2023, and entitled "METHOD, APPARATUS, ELECTRONIC DEVICE AND STORAGE MEDIUM FOR DATA PROCESSING", the entirety of which is incorporated herein by reference in its entirety.

### FIELD

This application relates to the field of information processing technology, and more particularly, to a method, apparatus, electronic device and storage medium for data processing.

### BACKGROUND

A target object, something that can be exchanged, may be tangible or intangible. The target object is, for example, a commodity, and an intangible commodity may be, for example, a service or the like. A resource attribute parameter may be a parameter capable of measuring a value of the target object, for example, a currency, a gold coin in a virtual transaction, other exchange in a barter transaction, and the like. Currently, there are a plurality of organizations participating in exchange of target objects, for example, an e-commerce platform includes a plurality of merchants. The e-commerce platform and the merchant may introduce various ways of adjusting the resource attribute parameter of the target object, for example, minimum price, discount, and spend-and-save of the merchant and other adjustments, and the e-commerce platform may also introduce adjustments such as spend-and-save over the platform and platform red packet, to improve the exchange success rate of the target object.

Regarding the plurality of adjustment ways of the resource attribute parameter of the target object, the transferor and transferee of the target object often cannot conveniently process the resource attribute parameter of the target object, and sometimes even incur losses due to processing errors.

### SUMMARY

It is the objective of embodiments of this application to provide a method, apparatus, electronic device and storage medium for data processing, which can conveniently process resource attribute parameters of a target object.

To resolve the foregoing technical problem, the embodiments of this application are implemented in the following aspects.

According to a first aspect, an embodiment of this application provides a method of data processing, including: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting, in the editing page, a use state of a second selection factor corresponding to a second adjustment mode according to a preset correspondence between the first adjustment mode and the second adjustment mode.

According to a second aspect, an embodiment of this application provides a apparatus for data processing, including: a receiving module configured to receive a first selection operation on a first selection factor in an editing page of a resource attribute parameter of a target object; a first determining module configured to determine, according to the first selection operation, a first adjustment mode corresponding to the first selection factor, the first adjustment mode being a mode of adjusting the resource attribute parameter of the target object; and a processing module configured to adjust, in the editing page, a use state of a second selection factor corresponding to a second adjustment mode according to a preset correspondence between the first adjustment mode and the second adjustment mode.

According to a third aspect, an embodiment of this application provides an electronic device, including: a memory, a processor, and computer executable instructions stored in the memory and executable on the processor, wherein the computer executable instructions, when executed by the processor, implement the steps of: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting, in the editing page, a use state of a second selection factor corresponding to a second adjustment mode according to a preset correspondence between the first adjustment mode and the second adjustment mode.

According to a fourth aspect, an embodiment of this application provides a computer readable storage medium, wherein the computer readable storage medium is configured to store computer executable instructions which, when executed by a processor, implement the steps of: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting, in the editing page, a use state of a second selection factor corresponding to a second adjustment mode according to a preset correspondence between the first adjustment mode and the second adjustment mode.

### BRIEF DESCRIPTION OF THE DRAWINGS

In order to more clearly describe the technical solutions in the embodiments of this application or prior art, the accompanying drawings to be used in the description of the embodiments or prior art are briefly described below. Obviously, the drawings in the following description are merely embodiments of this application, and those of ordinary skill in the art may further obtain other drawings based on these drawings without creative work.
Fig. 1 is a schematic flowchart of a method of data processing according to an embodiment of this application;
Figs 2a -2c each are a schematic diagram of a page according to an embodiment of this application;
Fig. 3 is a schematic flowchart of another method of data processing according to an embodiment of this application;
Figs 4a -4c each are a schematic diagram of another page according to an embodiment of this application;
Figs 5a -5b each are a schematic diagram of another page according to an embodiment of this application;
Fig. 6 is a schematic diagram of another page according to an embodiment of this application;
Fig. 7 is a schematic structural diagram of an apparatus for data processing according to an embodiment of this application; and
Fig. 8 is a schematic diagram of a hardware structure of an electronic device for performing a method of data processing according to an embodiment of this application.

### DETAILED DESCRIPTION

To make those skilled in the art better understand the technical solutions in this application, the technical solutions in the embodiments of this application are clearly and completely described below with reference to the accompanying drawings. Obviously, the embodiments to be described are merely part rather than all of the embodiments of this application. All other embodiments obtained by those of ordinary skill in the art without creative efforts based on the embodiments in this application shall fall within the scope of this application.

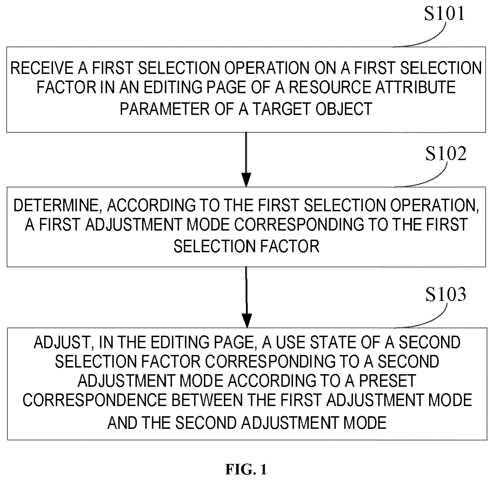

Fig. 1 is a schematic flowchart of a method of data processing according to an embodiment of this application. The method may be performed by an electronic device, e.g., a terminal device or a server device. In other words, the method may be performed by software or hardware installed in the terminal device or the server device. The server includes, but is not limited to, a single server, a server cluster, a cloud server, or a cloud server cluster. As shown in Fig. 1, the method may include the following steps.

S101: receiving a first selection operation on a first selection factor in an editing page for a resource attribute parameter of a target object.

The target object is something that may be exchanged, for example, a commodity, and the resource attribute parameter may be a parameter capable of measuring a value of the target object, for example, a currency, a gold coin in a virtual transaction, another exchange in a barter transaction, and the like.

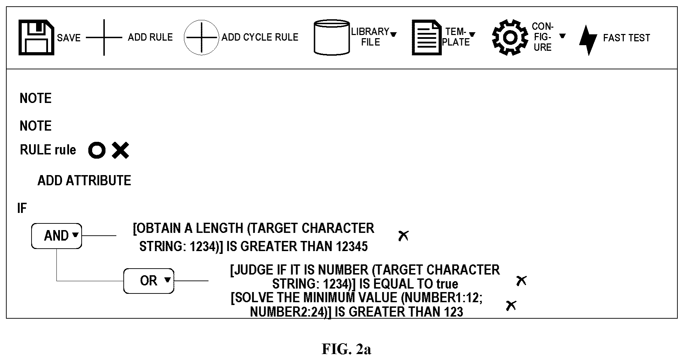

In some applications (APPs), an editing page may be provided, wherein the editing page is used to edit the resource attribute parameter of the target object. In this step, the APP may be provided by an e-commerce platform, and may be edited by a merchant selling the commodity or a buyer purchasing the commodity on the editing page. Figs 2a -2b each are a schematic diagram of an editing page of resource attribute parameters of a target object.

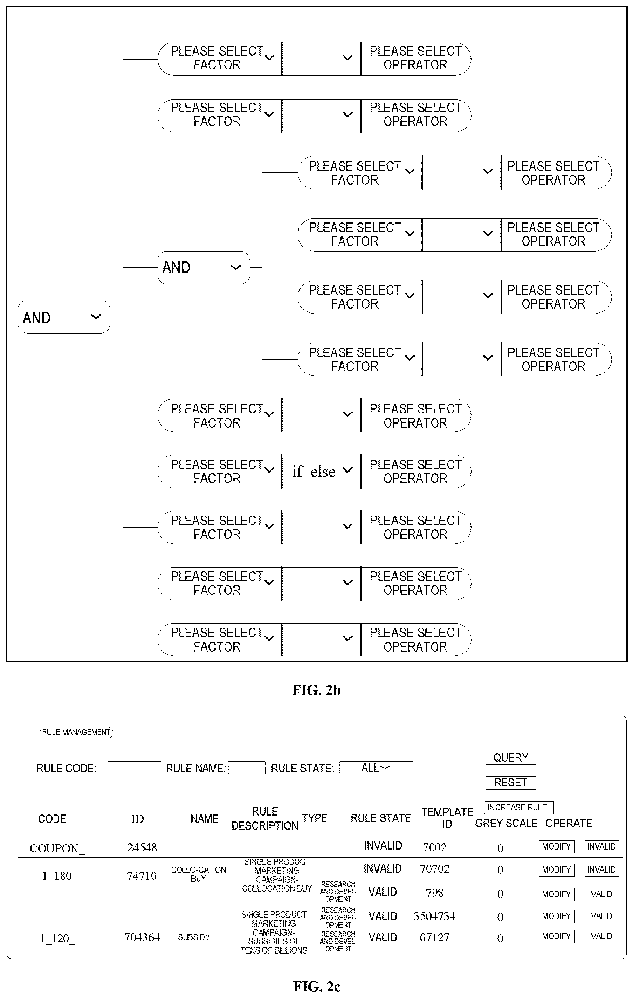

The first selection factor is an option displayed in the editing page for adjusting the resource attribute parameter of the target object, for example, the "please select factor" button in the editing page shown in Fig. 2b.

The first selection operation is an operation that triggers the first selection factor. As shown in Fig. 2b, the editing page in Fig. 2b includes a plurality of "please select factor" buttons, and in this step, the "please select factor" button may be triggered. In conjunction with Fig. 2a, the editing page may further include options for a plurality of functions, and an option for each function provides at least one function, and the editing page may include options for storing, adding rules, library files, templates, tests and other functions to facilitate a user to select a related function. Illustration is presented below by way of example in which an added rule is a check rule. The check rule is used to judge whether the resource attribute parameter is valid, so as to select the resource attribute parameter that meets a certain rule, for example, whether the length of a target character string corresponding to the resource attribute parameter is greater than a preset value, and whether the value of a minimum resource attribute parameter is greater than a minimum threshold, or the like. In addition, multiple rules may also be selected at the same time for overlay judgment.

Optionally, Figs. 2a -2b may be two independent pages, or may be combinable into one page for display.

S102: determining a first adjustment mode corresponding to the first selection factor according to the first selection operation.

The first adjustment mode is a mode of adjusting the resource attribute parameter of the target object, or may be referred to as a mode of changing the resource attribute parameter of the target object. There is a correspondence between the first selection factor and the first adjustment mode. A selection factor corresponds to at least one first adjustment mode. For example, when the first selection factor is a button corresponding to discount, the first adjustment mode is a discount mode. That is, the value parameter of the corresponding commodity is adjusted in a discount mode, and the value parameter of the commodity is changed to a discount value.

S103: adjusting a use state of a second selection factor corresponding to a second adjustment mode in the editing page according to a preset correspondence between the first adjustment mode and the second adjustment mode.

The second adjustment mode is a mode of adjusting the resource attribute parameter of the target object. A second adjustment mode having a preset correspondence with the first adjustment mode selected by the user is determined from a plurality of adjustment modes of adjusting the resource attribute parameter of the target object. Before this step, a preset correspondence is maintained, in response to the preset correspondence including a relationship between the plurality of adjustment modes. For example, a discount and spend-and-save may be used in combination, and then in this step, the second adjustment mode (spend-and-save) that has a in-combination-use relationship with the first adjustment mode (discount) may be determined. For another example, if the store red envelope is not combined with flash sale, in this step, it may be determined that the second adjustment mode (flash sale) that has a non-in-combination-use relationship with the first adjustment mode (store red envelope) may be determined.

The use state of the second selection factor corresponding to the second adjustment mode is adjusted in the editing page according to the attribute of the preset correspondence, for example, combinable or non-in-combination-use, to facilitate the user to process the resource attribute parameter of the target object, for example, the value parameter of the related commodity.

In a possible implementation, adjusting the use state of the second selection factor corresponding to the second adjustment mode in the editing page according to the preset correspondence between the first adjustment mode and the second adjustment mode includes: setting, in the editing page, the use state of the second selection factor corresponding to the second adjustment mode to an available state or a disabled state based on the preset correspondence between the first adjustment mode and the second adjustment mode.

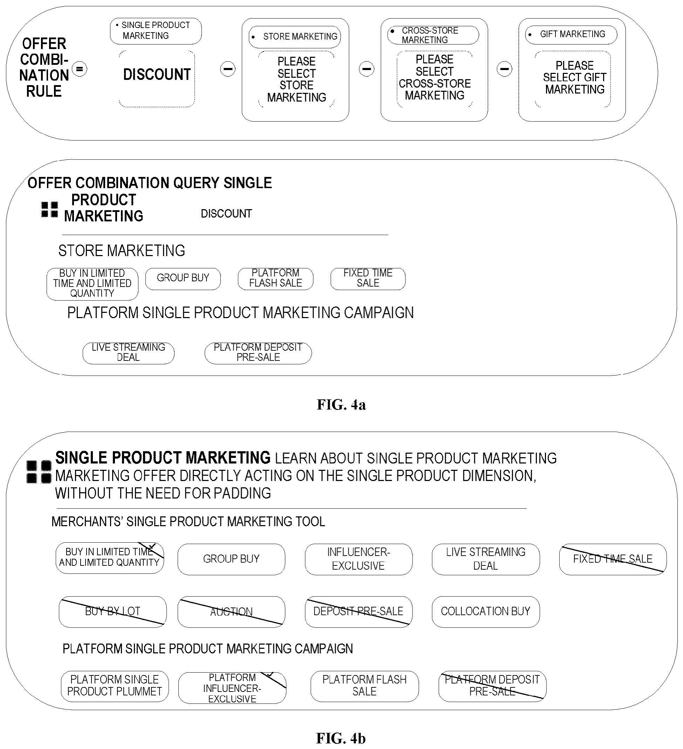

Specifically, in a case that the attribute of the preset correspondence is in-combination-use, in the editing page, the second selection factor corresponding to the second adjustment mode is set to the available state, and the second selection factor corresponding to the second adjustment mode in the available state is in a user-visible and selectable state, and a trigger operation of the user may be received. On the contrary, when the attribute of the preset correspondence is non-in-combination-use, in the editing page, the second selection factor corresponding to the second adjustment mode is set to the disabled state, and the second selection factor corresponding to the second adjustment mode in the disabled state is in a user-invisible and non-selectable state, for example, set to gray or invisible, or a display mode as shown in Fig. 4b, so that the trigger operation of the user may not be received in the disabled state.

In a possible implementation, the second adjustment mode having the preset correspondence with the first adjustment mode may be determined based on a preset correspondence description field in a first preset script.

For example, the description field in the pseudo code may indicate that the second adjustment mode having the in-combination-use relationship with the current first adjustment mode is the red packet.

In a possible implementation, a first value matching the first selection factor may be determined; the first value is filled into a first field of a first preset script, the first preset script being configured to execute the first adjustment mode; and a first adjustment is performed on the resource attribute parameter by running the first preset script. For example, if the selection factor "red envelope" is selected, the first value matching the red envelope is filled into the first field of the first preset script, and the first adjustment of subtracting the value of the red packet from the commodity price is performed through the first preset script.

In this step, the selection value corresponding to the selection operation of the user is filled into the corresponding field of the corresponding script, and the execution of the script is initiated, so that the adjustment mode for the commodity price corresponding to the selection operation is performed. In this step, the technical staff does not need to write code, commodity operators such as commodity platform sales may perform operation through a user-oriented page, call the script for price adjustment and thus query in real time a processing result corresponding to the commodity price.

Before this step, the adjustment mode of the plurality of resource attribute parameters may be set in a setting page of adjustment modes. As shown in Fig. 2c, the setting page includes various information of the adjustment mode of the resource attribute parameter, including: code, name, rule description, type, whether to take effective, and the like. A "rule management" button is triggered, and the adjustment mode of the resource attribute parameter of the commodity price may be set in the setting page. For example, a coding 1 _ 180 in an adjustment mode is set, a corresponding adjustment mode name is "collocation purchase", a state of the rule is effective, and the processing of the resource attribute parameter of the target object may be realized.

In the embodiments of this application, a first selection operation on a first selection factor is received in an editing page of a resource attribute parameter of a target object; a first adjustment mode corresponding to the first selection factor is determined according to the first selection operation, the first adjustment mode being a mode of adjusting the resource attribute parameter of the target object; according to a preset correspondence between the first adjustment mode and a second adjustment mode, a use state of a second selection factor corresponding to the second adjustment mode is adjusted in the editing page; the use state of the second adjustment mode associated with the first adjustment mode is determined based on the determined first adjustment mode and is displayed in the editing page. Therefore, the resource attribute parameter of the target object may be conveniently processed.

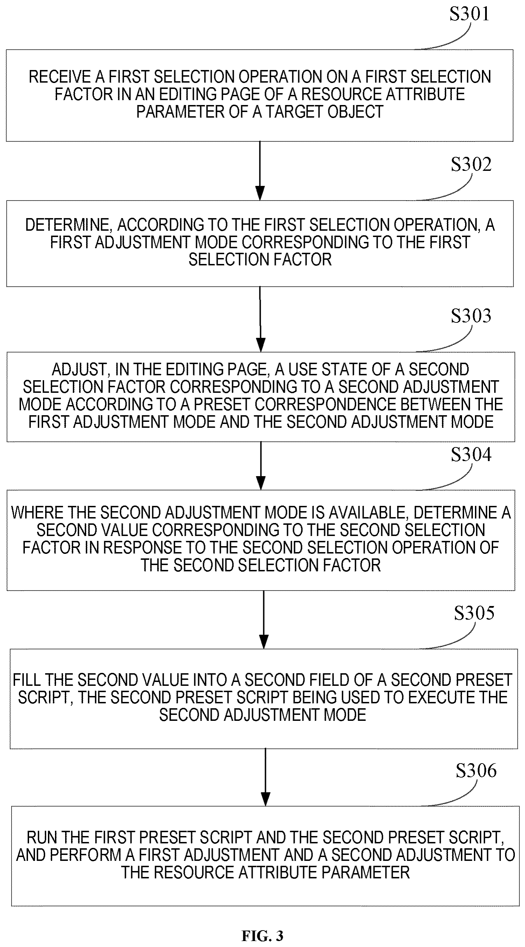

Fig. 3 is a schematic flowchart of a method of data processing according to an embodiment of this application. The method may be performed by an electronic device, e.g., a terminal device or a server device. In other words, the method may be performed by software or hardware installed in the terminal device or the server device. The server includes, but is not limited to, a single server, a server cluster, a cloud server, or a cloud server cluster. As shown in Fig. 3, the method may include the following steps.

S301: receiving a first selection operation on a first selection factor in an editing page for a resource attribute parameter of a target object.

Fig. 4a is a schematic diagram of an editing page of a resource attribute parameter of a target object. In a possible implementation, in the editing page of the resource attribute parameter of the target object shown in Fig. 4a, this step may include receiving a selection of at least one first category, receiving the first selection operation on the first selection factor in the first category, for example, receiving a selection of a single product marketing category, and then receiving a selection of a selection factor discount under the single product marketing category.

As shown in Fig. 4a, the first category includes, for example, single product marketing, the single product marketing being used to represent a promotion policy of a single commodity; store marketing is a promotion policy for a single store; platform marketing is used to represent a promotion policy of the platform. Each category includes a corresponding selection factor, for example, a commodity base price, store spend-and-save, a store coupon, platform spend-and-save, a platform coupon, a gift discount, and the like, which are not shown one by one in the figure.

S302: determining a first adjustment mode corresponding to the first selection factor according to the first selection operation.

This step is described in the step corresponding to the embodiment in Fig. 1, and details are not repeated herein.

S303: adjusting a use state of a second selection factor corresponding to a second adjustment mode in the editing page according to a preset correspondence between the first adjustment manner and the second adjustment mode.

As shown in Fig. 4a, a second category having a preset correspondence with single product marketing and/or respective adjustment modes in the second category may be displayed, for example, a second adjustment mode such as group buying in the store marketing category, platform deposit presale in the platform marketing category, and the like.

In this step, a plurality of transaction subjects associated in a transaction process may be obtained. For example, a plurality of transaction subjects commonly associated with a transaction process include one or more of a buyer, a commodity, a store, a network transaction platform, and a live streamer. Each subject may be associated with a price adjustment mode. For example, a buyer may have a marketing mode corresponding to the buyer identity, e.g., member exclusive or the like. In this step, a plurality of transaction subjects associated with a transaction process may be obtained, and a price adjustment mode corresponding to each transaction subject is obtained to form a set including a plurality of price adjustment modes, which are displayed for selection of a first account in Fig. 4a.

Fig. 4b is another implementation of an editing page. In this figure, "group buying" may be used to represent an available state. "Auction" or the like may be used to represent a disabled state.

S304: in the case that the second adjustment mode is available, determining a second value corresponding to the second selection factor in response to a second selection operation on the second selection factor.

After the available or unavailable state information about the plurality of second adjustment modes is obtained in the foregoing step, in this step, a second selection operation performed by the user on a selection factor corresponding to the plurality of second adjustment modes in available states is received, and a second value corresponding to the selection factor is determined. For example, the second selection operation of the user is store spend-and-save.

S305: filling the second value in a second field of a second preset script, the second preset script being used to perform the second adjustment mode.

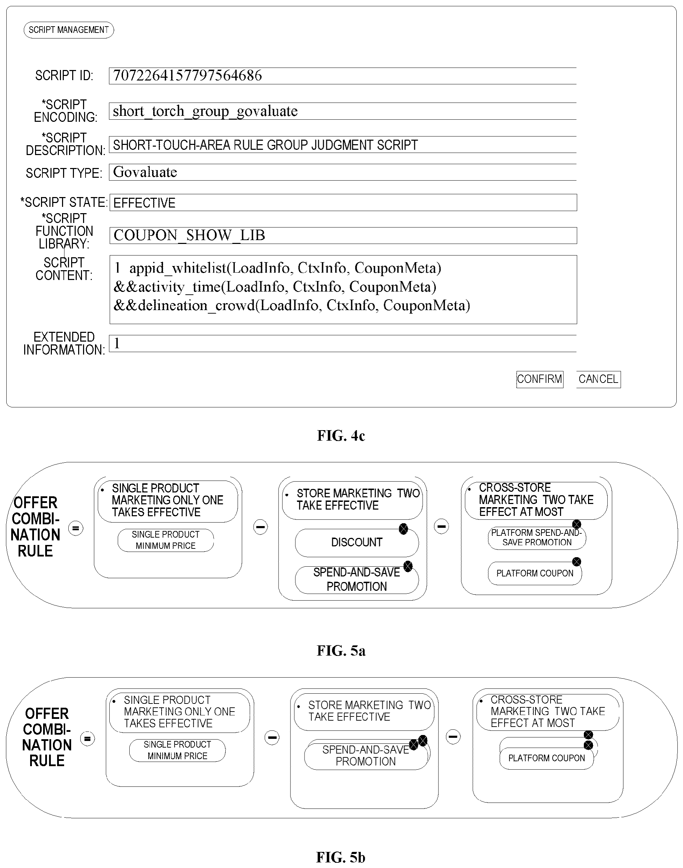

Like the foregoing step, the second value corresponding to the second selection factor of the user is filled into a second field in a second preset script, for example, a script corresponding to store spend-and-save. In this embodiment of this application, related script management is performed in the background, and a corresponding script may be edited in a script operation page shown in Fig. 4c.

S306: running the first preset script and the second preset script, and performing a first adjustment and a second adjustment on the resource attribute parameter.

In this step, two preset scripts corresponding to the foregoing two adjustment modes are run, so that a first adjustment and a second adjustment of the commodity price are performed, to realize in-combination-use of the corresponding two promotion policies.

In a possible implementation, in this step, performing the first adjustment and the second adjustment on the resource attribute parameter includes: determining a first category corresponding to the first adjustment and a second category corresponding to the second adjustment; and determining, based on priorities of the first category and the second category, an order of performing the first adjustment and the second adjustment. For example, if the priority of the single product marketing is higher than that of the store marketing, the first adjustment mode of discount in the single product marketing is first processed, and then spend-and-save in the store marketing is performed, that is, the commodity price is first discounted, and spend-and-save is met after the discount.

In a possible implementation, the relationship between the plurality of adjustment modes may also be set by the first account. That is, before this step, a third selection of at least one processing relationship in the editing page may be received from the first account, wherein the plurality of processing relationships are displayed in the editing page for presenting a processing relationship between the first adjustment mode and the second adjustment mode; and the first adjustment and the second adjustment are performed based on the processing relationship.

In conjunction with Fig. 2b, the editing page may further display the foregoing processing relationship, the editing page may be further configured to receive a selection operation on the foregoing processing relationship. For example, a condition effective "if _ else" relationship may be selected between a plurality of selection factors, and there may be a plurality of processing relationships between the plurality of selection factors, including without limitation to, a logical AND, a logical OR, and an "if _ else".

In a possible implementation, after performing the first adjustment and the second adjustment, the method further includes: displaying, on a display page, target information in a predetermined order, wherein the display page is in a state visible to a second account, the target information includes one or more of the first adjustment mode, the second adjustment mode, a first category corresponding to the first adjustment, a second category corresponding to the second adjustment, and a processing relationship between the first adjustment mode and the second adjustment mode, and at least one of the target information is obtained by the first account editing in the editing page.

As shown in Fig. 5a, the display page includes two parts of "offer combination rule" and "query area", both of which include "single product marketing", "store marketing", "cross-store marketing", and "gift marketing" four marketing categories, and the same marketing categories belong to a one-to-one correspondence in "offer combination rule" and "query area". The "offer combination rule" part presents a currently selected marketing campaign, and the "query area" is for the user to click to select a marketing campaign. The user operation includes: clicking a specific marketing campaign in the "query area" for selection, and clicking again to cancel the selection. The "offer combination rule" part presents a marketing campaign selected by the user, displays a specific offer combination rule, and may also cancel a selection.

For the first account, the display page of this step may be shown in Fig. 5a, or may be displayed together when the selection operation is performed in Fig. 4a. That is, the display page may take various forms.

In a possible implementation, after displaying the target information, the method further includes: receiving a modification operation triggered on the display page, wherein the modification operation includes adding or deletion of the at least one first adjustment mode or the at least one second adjustment mode.

For the first account, for example, the platform operator, the at least one first adjustment mode or the at least one second adjustment mode may be added or deleted through the page of Fig. 4a or Fig. 5a. For a buyer, the at least one first adjustment mode or the at least one second adjustment mode may be added or deleted through the page of Fig. 5a. That is, both the commodity seller and the buyer may select to participate in a certain marketing campaign.

In a possible implementation, after displaying the target information in Fig. 5a, a switch operation triggered on the display page may be further received, wherein the switching operation is used to switch a display mode of the at least one target information, and the display mode includes a merged display mode or an unfolded display mode. After receiving the switch operation, for example, the page of Fig. 5b may be displayed, and various adjustment modes may be merged-displayed. Based on the merged display of Fig. 5b, if a switch operation is received again, the unfolded mode shown in Fig. 5a may be switched to.

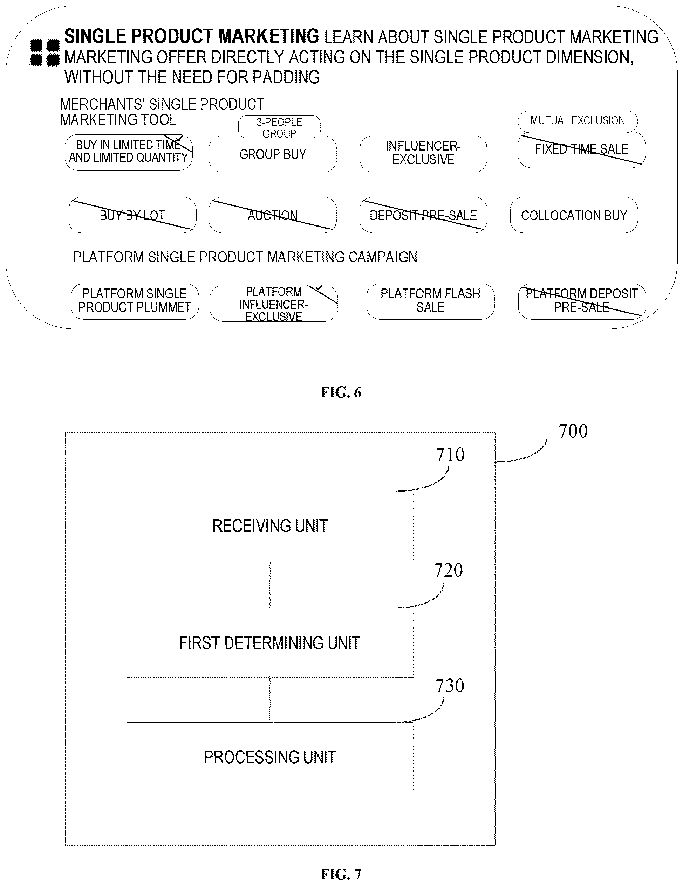

In a possible implementation, in the editing page or the display page of the resource attribute parameter of the target object, for example, in Fig. 4a, Fig. 4b, Fig. 5a, and Fig. 5b, in response to the second adjustment mode being an available state, an applying condition of the second adjustment mode may be displayed; and in response to the second adjustment mode being a disabled state, a disabling reason of the second adjustment mode is displayed. As shown in Fig. 6, the applying condition of the second adjustment mode of group buying is 3 is a 3-people group basis, and the disabling reason of scheduled sale is mutual exclusion. Fig. 6 makes illustration based on Fig. 4b, whereas this step may be implemented based on the editing page or the display page of the resource attribute parameter of the target object in various forms.

Fig. 7 is a schematic structural diagram of an apparatus for data processing according to an embodiment of this application. The apparatus 700 comprises: a receiving module 710, a first determining module 720 and a processing module 730.

The receiving module 710 is configured to receive a first selection operation on a first selection factor in an editing page of a resource attribute parameter of a target object; the first determining module 720 is configured to determine, according to the first selection operation, a first adjustment mode corresponding to the first selection factor, the first adjustment mode being a mode of adjusting the resource attribute parameter of the target object; and the processing module 730 is configured to adjust, in the editing page, a use state of a second selection factor corresponding to a second adjustment mode according to a preset correspondence between the first adjustment mode and the second adjustment mode.

In a possible implementation, the processing module 730 is configured to set, in the editing page, a use state of a second selection factor corresponding to a second adjustment mode to an available state or a disabled state according to a preset correspondence between the first adjustment mode and the second adjustment mode.

In a possible implementation, the processing module 730 is configured to: determine, based on a preset correspondence description field in a first preset script, a second adjustment mode having a preset correspondence with the first adjustment mode; when the preset correspondence indicates that the first adjustment mode and the second adjustment mode are combinable, set the second selection factor to an available state in the editing page; and in response to the preset correspondence presenting that the first adjustment mode and the second adjustment mode are non-combinable, set the second selection factor to a disabled state in the editing page.

In a possible implementation, the first determining module 720 is configured to: determine a first value matching a selection factor corresponding to the first selection operation; fill the first value into a first field of a first preset script , the first preset script being configured to execute the first adjustment mode; and perform a first adjustment on the resource attribute parameter by running the first preset script.

In a possible implementation, the processing module 730 is further configured to: in response to the second adjustment mode being available, determine a second value corresponding to at least one second selection in response to the second selection of the at least one second adjustment mode; fill the second value into a second field of a second preset script, the second preset script being configured to execute the second adjustment mode; run the first preset script and the second preset script, and perform a first adjustment and a second adjustment on the resource attribute parameter.

In a possible implementation, the processing module 730 is further configured to: determine a first category corresponding to the first adjustment and a second category corresponding to the second adjustment; and determine, based on priorities of the first category and the second category, an order of performing the first adjustment and the second adjustment.

In a possible implementation, the processing module 730 is further configured to: receive a third selection of at least one processing relationship in the editing page, wherein the editing page displays a plurality of processing relationships for presenting a processing relationship between the first adjustment mode and the second adjustment mode; and perform the first adjustment and the second adjustment based on the third selection.

In a possible implementation, the apparatus 700 further includes: a display module configured to: display, on a display page, target information in a predetermined order, the display page being in a state visible to a second account, the target information including one or more of the first adjustment mode, the second adjustment mode, the first category corresponding to the first adjustment, the second category corresponding to the second adjustment, and the processing relationship between the first adjustment mode and the second adjustment mode, and at least one of the target information being obtained by a first account editing in the editing page.

In a possible implementation, the receiving module 710 is further configured to: receive a modification operation triggered on the display page, the modification operation including adding or deletion of the at least one first adjustment mode or the at least one second adjustment mode.

In a possible implementation, the receiving module 710 is further configured to: receive a switch operation triggered on the display page, the switch operation being used to switch a display mode of the at least one target information, and the display mode including a merged display mode or an unfolded display mode.

In a possible implementation, the receiving module 710 is configured to: receive a selection of at least one first category on the editing page of the resource attribute parameter of the target object; and receive the first selection operation on at least one selection factor in the first category.

In a possible implementation, the processing module 730 is further configured to: in response to the second adjustment mode being an available state, display an applying condition of the second adjustment mode; and in response to the second adjustment mode being a disabled state, display a disabling reason of the second adjustment mode.

The apparatus 700 provided in this embodiment of this application may perform the methods described in the foregoing method embodiments of Fig. 1 and Fig. 3, and implement the functions and beneficial effects of the methods described in the foregoing method embodiments, which is not repeated herein.

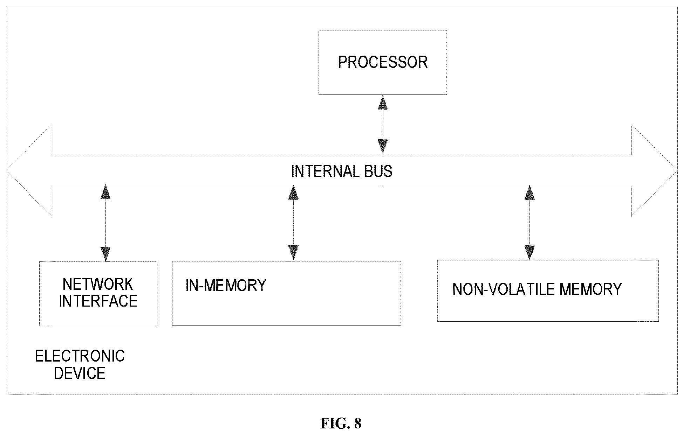

Fig. 8 is a schematic diagram of a hardware structure of an electronic device for performing a method of data processing according to an embodiment of this application. With reference to this figure, at the hardware level, the memory may include a memory, optionally, may include an internal bus, a network interface, and a memory. The memory might include a memory, for example, a high-speed random access memory (RAM), or may further include a non-volatile memory, for example, at least 1 disk memories. Of course, the electronic device may further include the hardware required by another service.

The processor, the network interface, and the memory may be connected to each other via the internal bus, and the internal bus may be an Industry Standard Architecture (ISA) bus, a Peripheral Component Interconnect (PCI) bus, an Extended Industry Standard Architecture (EISA) bus, or the like. The bus may be classified into an address bus, a data bus, a control bus, and the like. For ease of representation, only one bidirectional arrow is used in the figure, but it does not mean that there is only one bus or one type of bus.

The memory is configured to store a program. Specifically, the program may include program code, and the program code includes a computer operation instruction. The memory may include a memory and a non-volatile memory, and provide an instruction and data to the processor.

The processor reads a corresponding computer program from the nonvolatile memory to the memory and then runs, and forms a device for positioning the target user on the logic level. The processor executes the program stored in the memory and is specifically configured to: receive a first selection operation on a first selection factor in an editing page of a resource attribute parameter of a target object; determine, according to the first selection operation, a first adjustment mode corresponding to the first selection factor, the first adjustment mode being a mode of adjusting the resource attribute parameter of the target object; and adjust, in the editing page, a use state of a second selection factor corresponding to a second adjustment mode according to a preset correspondence between the first adjustment mode and the second adjustment mode.

The foregoing methods disclosed in the embodiments shown in Fig. 1 and Fig. 3 of this application may be applied to a processor, or implemented by a processor. The processor may be an integrated circuit chip having a signal processing capability. In an implementation process, steps of the foregoing method may be completed by using an integrated logic circuit of hardware in the processor or an instruction in a form of software. The processor may be a general-purpose processor, including a central processing unit (CPU), a network processor (NP), or the like; or may be a digital signal processor (DSP), an application-specific integrated circuit (ASIC), a field-programmable gate array (FPGA), another programmable logic device, a discrete gate or transistor logic device, or a discrete hardware component. The methods, steps, and logical block diagrams disclosed in the embodiments of this application may be implemented or performed. The general purpose processor may be a microprocessor or the processor may be any conventional processor or the like. The steps of the method disclosed in the embodiments of this application may be directly implemented as a hardware decoding processor or a combination of hardware and software modules in a decoding processor. The software module may be located in a mature storage medium in a random access memory, a flash memory, a read-only memory, a programmable read-only memory, an electrically erasable programmable memory, a register, or the like. The storage medium is located in the memory, the processor reads information in the memory, and completes the steps of the foregoing method in combination with hardware of the storage medium.

The electronic device may further perform the methods described in the foregoing method embodiments, and implement the functions and beneficial effects of the methods described in the foregoing method embodiments, and details are not described herein again.

Of course, in addition to the software implementation, the electronic device of this application does not exclude other implementations, such as a logic device or a combination of software and hardware, that is, the execution body of the following processing flow is not limited to each logic unit, or may be a hardware or a logic device.

An embodiment of this application further provides a computer-readable storage medium, storing one or more programs, wherein the one or more programs, when executed by an electronic device including a plurality of applications, cause the electronic device to perform the following operations: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting, in the editing page, a use state of a second selection factor corresponding to a second adjustment mode according to a preset correspondence between the first adjustment mode and the second adjustment mode. That is, the one or more programs, when executed by an electronic device including a plurality of applications, cause the electronic device to perform the methods described in the foregoing method embodiments of Fig. 1 and Fig. 3, and implement the functions and beneficial effects of the methods described in the foregoing method embodiments, and details are not described herein again.

The computer-readable storage medium includes a read-only memory (ROM), a random access memory (RAM), a magnetic disk, an optical disk, or the like.

Further, an embodiment of this application further provides a computer program product, including a computer program stored on a non-transitory computer-readable storage medium, wherein the computer program includes a program instruction which, when executed by a computer, implements the following process: receiving a first selection operation on a first selection factor in an editing page for a resource attribute parameter of a target object; determining, according to the first selection operation, a first adjustment mode corresponding to the first selection factor, the first adjustment mode being a mode of adjusting the resource attribute parameter of the target object; and adjusting, in the editing page, a use state of a second selection factor corresponding to a second adjustment mode according to a preset correspondence between the first adjustment mode and the second adjustment mode. That is, when the program instructions are executed by the computer, the methods described in the foregoing method embodiments of Fig. 1 and Fig. 3 are performed, and functions and beneficial effects of the methods described in the foregoing method embodiments are implemented, and details are not described herein again.

In conclusion, the foregoing descriptions are only preferred embodiments of this application, and are not intended to limit the protection scope of this application. Any modification, equivalent substitution, improvement and the like made within the spirit and principle of the disclosure shall fall within the protection scope of this application.

The system, apparatus, module, or unit illustrated in the foregoing embodiments may be specifically implemented by a computer chip or an entity, or implemented by a product having a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer-readable media include permanent and non-permanent, removable and non-removable media capable of implementing information storage by any method or technology. The information may be computer readable instructions, data structures, modules of a program, or other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read-only memory (CD-ROM), digital versatile disc (DVD) or other optical storage, magnetic cassettes, magnetic tape magnetic disk storage or other magnetic storage devices, or any other non-transmission medium, which can be used to store information accessible by a computing device. According to the definitions herein, computer-readable media do not include transitory media, such as modulated data signals and carriers.

It should also be noted that the terms "comprise," "include," or any other variant thereof are intended to cover a non-exclusive inclusion, such that processes, methods, target objects, or devices that include a series of elements include not only those elements, but also other elements not explicitly listed, or elements inherent to such processes, methods, target objects, or devices. Without further restriction, the elements defined by the statement "including one" do not preclude the presence of additional identical elements in the process, method, target object, or device that includes the elements.

Various embodiments in this specification are described in a progressive manner, and parts that are the same and similar between the embodiments may be referred to each other, and each embodiment focuses on differences from other embodiments. In particular, for the system embodiment, since it is substantially similar to the method embodiment, the description is relatively simple, and reference may be made to some descriptions of the method embodiments.

## Claims

1. A method of data processing, comprising:
receiving a first selection operation on a first selection factor in an editing page for a resource attribute parameter of a target object;
determining, according to the first selection operation, a first adjustment mode corresponding to the first selection factor, wherein the first adjustment mode is a mode of adjusting the resource attribute parameter of the target object; and
adjusting a use state of a second selection factor corresponding to a second adjustment mode in the editing page according to a preset correspondence between the first adjustment mode and the second adjustment mode.

2. The method of claim 1, wherein adjusting a use state of a second selection factor corresponding to a second adjustment mode in the editing page according to a preset correspondence between the first adjustment mode and the second adjustment mode comprises:
setting a use state of the second selection factor corresponding to the second adjustment mode to an available state or a disabled state in the editing page according to a preset correspondence between the first adjustment mode and the second adjustment mode.

3. The method of claim 2, wherein setting a use state of the second selection factor corresponding to the second adjustment mode to an available state or a disabled state in the editing page according to a preset correspondence between the first adjustment mode and the second adjustment mode comprises:
determining a preset correspondence between the first adjustment mode and the second adjustment mode based on a preset correspondence description field in a first preset script;
in response to the preset correspondence presenting that the first adjustment mode and the second adjustment mode are combinable, setting the second selection factor to an available state in the editing page; and
in response to the preset correspondence presenting that the first adjustment mode and the second adjustment mode are non-combinable, setting the second selection factor to a disabled state in the editing page.

4. The method of claim 1, wherein after determining a first adjustment mode corresponding to the first selection factor according to the first election operation, the method further comprises:
determining a first value matching the first selection factor;
filling the first value into a first field of a first preset script, the first preset script being configured to execute the first adjustment mode; and
performing a first adjustment on the resource attribute parameter by running the first preset script.

5. The method of claim 3 or 4, wherein after setting a use state of the second selection factor corresponding to the second adjustment mode to an available state or a disabled state in the editing page according to a preset correspondence between the first adjustment mode and the second adjustment mode, the method further comprises:
in response to the second selection factor being available, determining a second value corresponding to the second selection factor in response to a second selection operation of the second selection factor;
filling the second value into a second field of a second preset script, the second preset script being configured to execute the second adjustment mode;
running the first preset script and the second preset script, and performing a first adjustment and a second adjustment on the resource attribute parameter.

6. The method of claim 5, wherein performing a first adjustment and a second adjustment on the resource attribute parameter comprises:
determining a first category corresponding to the first adjustment and a second category corresponding to the second adjustment; and
determining, based on priorities of the first category and the second category, an order of performing the first adjustment and the second adjustment.

7. The method of claim 5, wherein performing a first adjustment and a second adjustment on the resource attribute parameter comprises:
receiving a third selection of at least one processing relationship in the editing page, wherein the editing page displays a plurality of the processing relationships for presenting a processing relationship between the first adjustment mode and the second adjustment mode; and
performing the first adjustment and the second adjustment according to the third selection.

8. The method of claim 7, wherein after performing the first adjustment and the second adjustment, the method further comprises:
displaying target information in a predetermined order on a display page being in a state visible to a second account, the target information including one or more of the first adjustment mode, the second adjustment mode, a first category corresponding to the first adjustment, a second category corresponding to the second adjustment, and the processing relationship between the first adjustment mode and the second adjustment mode, and at least one of the target information being obtained by a first account editing in the editing page.

9. The method of claim 8, wherein after displaying target information, the method further comprises:
receiving a modification operation triggered on the display page, the modification operation including adding or deletion of at least one first adjustment mode or at least one second adjustment mode.

10. The method of claim 8, wherein after displaying target information, the method further comprises:
receiving a switch operation triggered on the display page, the switch operation being used to switch a display mode of the target information, and the display mode including a merged display mode or an unfolded display mode.

11. The method of claim 1, wherein receiving a first selection operation on a first selection factor in an editing page for a resource attribute parameter of a target object comprises:
receiving a selection of at least one first category on the editing page; and
receiving the first selection operation on the first selection factor in the first category.

12. The method of claim 2, wherein after setting a use state of the second selection factor corresponding to the second adjustment mode to an available state or a disabled state in the editing page according to a preset correspondence between the first adjustment mode and the second adjustment mode, the method further comprises:
in response to the second selection factor being an available state, displaying an applying condition of the second adjustment mode; and
in response to the second selection factor being a disabled state, displaying a disabling reason of the second adjustment mode.

13. An apparatus for data processing, comprising:
a receiving module configured to receive a first selection operation on a first selection factor in an editing page for a resource attribute parameter of a target object;
a first determining module configured to determine, according to the first selection operation, a first adjustment mode corresponding to the first selection factor, the first adjustment mode being a mode of adjusting the resource attribute parameter of the target object; and
a processing module configured to adjust a use state of a second selection factor corresponding to a second adjustment mode in the editing page according to a preset correspondence between the first adjustment mode and the second adjustment mode.

14. An electronic device, comprising:
a processor; and
a memory configured to store computer executable instructions which, when executed, cause the processor to perform a method of data processing according to any of claims 1 to 12.

15. A computer readable medium, storing one or more programs, when executed by an electronic device comprising a plurality of applications, causing the electronic device to perform a method of data processing according to any of claims 1 to 12.
